# EUROPÄISCHE PATENTSCHRIFT

(11) **EP 1 963 750 B1**
(45) Veröffentlichungstag und Bekanntmachung des Hinweises auf die Patenterteilung: **23.04.2014**
(21) Anmeldenummer: 06828751.5
(22) Anmeldetag: 20.12.2006
(51) Int. Cl.: F24D 13/02, H05B 3/34, F24D 3/14

(54) **TEMPERIERUNGSMATTE**
TEMPERATURE-CONTROLLING MAT
MATELAS DE CHAUFFAGE RÉVERSIBLE

(30) Priorität: 23.12.2005 DE 102005061784
(43) Veröffentlichungstag der Anmeldung: 03.09.2008
(73) Patentinhaber: Danfoss A/S, 6430 Nordborg (DK)
(72) Erfinder: OLSEN, Leif, DK-7080 Boerkop (DK); MELBALLE, Thomas, DK-7100 Vejle (DK); BERNTH, Taj, DK-7100 Vejle (DK); UTOFT, Verner, DK-7300 Jelling (DK)
(74) Vertreter: Knoblauch, Andreas
(86) Internationale Anmeldenummer: PCT/DK2006/000729
(87) Internationale Veröffentlichungsnummer: WO 2007/082535

(56) Entgegenhaltungen:
- EP-A- 1 638 371
- EP-A2- 0 369 293
- WO-A-00/25069

## Beschreibung

Die Erfindung betrifft eine Temperierungsmatte mit einer Trägerbahn, die eine Oberseite und eine Unterseite aufweist, und mindestens einer Temperiesreinrichtung, die an der Trägerbahn angeordnet ist.

Eine derartige Matte ist beispielsweise aus WO 00/25063 A1 bekannt. Die Trägerbahn ist als Gitter ausgebildet, auf dem eine Heizleitung schlangenförmig angeordnet ist, wobei sich Längsabschnitte der Heizleitung parallel zu Gitterfäden erstrecken. Die Heizleitung ist mit einem gitterförmigen Klebestreifen auf der Oberseite der Trägerbahn befestigt. Ein Klebematerial ist auf die Unterseite des Gitters aufgetragen. Dieses Klebematerial dient dazu, bei der Installation der Matte das Gitter mit einem Untergrund zu verkleben. Nachdem die Matte auf den Untergrund, beispielsweise einen Estrich oder dergleichen, geklebt worden ist, wird sie mit einer weiteren Schicht abgedeckt, beispielsweise aus Spachtelmasse oder Fliesenkleber.

In den meisten Fällen reicht die Befestigung der Heizleitungsmatte auf diese Weise am Boden aus.

Bei bestimmten Massen, die auf die Heizleitungsmatte aufgetragen werden, insbesondere bei selbstnivellierenden Gußmassen mit einem hohen Wassergehalt, kann aber bei dieser Art der Befestigung ein Problem entstehen. Wasser kann nämlich unter den Kleber dringen, so daß sich die Heizleitungsmatte von dem Untergrund löst und an die Oberfläche der Gußmasse steigt oder aufschwimmt. Dies erfordert nicht nur eine zusätzliche Nachbearbeitung, die mit einem erheblichen Aufwand verbunden sein kann. Auch das Temperaturprofil des Fußbodens, in dem die Heizleitungsmatte angeordnet ist, wird dann ungleichmäßig, d.h. es gibt Bereiche, in denen die Überdeckung der Heizleitungsmatte dünner ist als in anderen Bereichen, so daß hier eine höhere Temperatur an der Oberfläche des Fußbodens erzielt wird.

Der Erfindung liegt die Aufgabe zugrunde, die Handhabungseigenschaften der Temperierungsmatte zu verbessern.

Diese Aufgabe wird bei einer Temperierungsmatte der eingangs genannten Art dadurch gelöst, daß der Klebstoff auf einem doppelseitigen Klebeband angeordnet ist, das auf die Unterseite der Trägerbahn geklebt ist, wobei im zusammengerollten Zustand der Temperierungsmatte der Klebstoff an der Unterseite des Klebebands durch die Oberseite der Trägerbahn abgedeckt ist und das Klebeband mit der Oberseite der Trägerbahn verklebt ist.

Mit dieser Ausgestaltung ist man bei der Wahl des Klebers, mit dem man die Temperierungsmatte mit dem Untergrund verkleben kann, wesentlich freier. Man kann also ein Klebeband mit einer hohen Klebefähigkeit verwenden, wobei der Klebstoff auch wasserbeständig sein kann, so daß man auch selbstnivellierende Gußmassen mit einem hohen Wasseranteil verwenden kann. Das doppelseitige Klebeband, das mit seiner Oberseite an die Unterseite der Trägerbahn geklebt ist, klebt dann die Trägerbahn auf dem Untergrund fest. Allerdings ist die Verwendung eines doppelseitigen Klebebandes problematisch, weil ein doppelseitiges Klebeband dann, wenn es auf der Trägerbahn aufgeklebt ist, eine klebende Fläche aufweist, die nach außen zeigt. Diese klebende Fläche würde an und für sich bei der Handhabung stören, so daß man üblicherweise bei doppelseitigen Klebebändern immer die freie Seite des Klebebandes mit einer Schutzfolie abdeckt. Würde man jedoch die Schutzfolie auf der Unterseite des Klebebandes belassen, würde dies zu einem erheblichen Aufwand beim Verlegen der Temperierungsmatte führen. Man müßte nicht nur die Temperierungsmatte ausrollen, sondern beim Ausrollen gleichzeitig auch noch die Schutzfolie abziehen. Diese umständliche Handhabung wird erfindungsgemäß ganz erheblich vereinfacht. Es reicht aus, die Temperierungsmatte beim Verlegen einfach auszurollen. Die klebrige Unterseite des doppelseitigen Klebebandes wird im zusammengerollten Zustand von der in der Regel nicht klebenden Oberseite der Trägerbahn abgedeckt, so daß sie vor dem Ausrollen geschützt ist und nach außen nirgendwo festkleben kann. Lediglich am Umfang der äußersten Windung der Temperierungsmatte im aufgerollten Zustand steht die klebende Unterseite des doppelseitigen Klebebandes nach außen. Beim Transport ist aber die zusammengerollte Temperierungsmatte ohnehin verpackt, so daß man die Verpackung auch verwenden kann, um die Klebeschicht an der Unterseite des doppelseitigen Klebebandes abzudecken. Darüber hinaus hat diese Ausgestaltung noch einen weiteren Vorteil. Die Temperierungsmatte bleibt im zusammengerollten Zustand zusammengerollt, weil die Klebeschicht an der Unterseite des doppelseitigen Klebebandes an der Oberseite der Trägerbahn anhaftet und damit verhindert, daß sich die zusammengerollte Temperierungsmatte entrollt und dabei ihren Durchmesser vergrößert. Beim Ausrollen der Temperierungsmatte ist dabei zwar eine geringe Kraft erforderlich, um die Klebeverbindung zwischen der Klebeschicht an der Unterseite des Klebebandes von der Oberseite der Trägerbahn zu lösen. Der Vorgang des Ausrollens kann aber sehr kontrolliert erfolgen.

Vorzugsweise ist die Temperiereinrichtung mit Hilfe eines Klebestreifens, der auf die Oberseite der Trägerbahn geklebt ist, an der Trägerbahn befestigt, wobei im zusammengerollten Zustand der Temperierungsmatte der Klebestreifen und das Klebeband in Überdeckung sind. Der Klebestreifen wird dann für zwei Aufgaben verwendet. Zum einen hält er die Temperiereinrichtung an der Trägerbahn fest. Zum anderen bildet er die Fläche, an der der Klebstoff an der Unterseite des Klebebandes an der Oberseite der Trägerbahn festklebt. Damit ist man bei der Gestaltung der Oberseite der Trägerbahn und ihrer Eigenschaften freier. Die Trägerbahn muß an ihrer Oberseite nicht so ausgebildet sein, daß sich der Klebstoff des Klebebandes leicht von ihr lösen läßt. Diese Eigenschaft ist lediglich für die Oberseite des Klebestreifens erforderlich.

Vorzugsweise ist die Temperiereinrichtung leitungsförmig ausgebildet. Um die Temperiereinrichtung an der Trägerbahn mit Hilfe eines Klebestreifens befestigen zu können, ist es sinnvoll, wenn der Klebestreifen die Temperiereinrichtung überdeckt und dennoch beidseitig der Temperiereinrichtung an der Trägerbahn festgeklebt werden kann. Dies läßt sich relativ einfach dann realisieren, wenn die Temperiereinrichtung mindestens eine Leitung aufweist, die beispielsweise mäanderförmig über die Trägerbahn geführt ist. Günstig ist es hierbei, wenn die Temperiereinrichtung Abschnitte aufweist, die senkrecht zur Längserstreckung des Klebestreifens verlaufen.

Vorzugsweise weist die Temperiereinrichtung eine elektrische Leitung auf. Eine elektrische Leitung wird erhitzt, wenn man einen elektrischen Strom durchleitet. Dies gilt insbesondere dann, wenn die elektrische Leitung als Widerstandsleitung ausgebildet ist. Durch eine geeignete Dimensionierung der Widerstandswerte läßt sich die Wärmeabgabe relativ genau vorherbestimmen.

Alternativ oder zusätzlich kann vorgesehen sein, daß die Temperiereinrichtung eine Fluidleitung zum Durch-leiten eines Wärmeträgerfluids aufweist. Als Wärmeträgerfluid läßt sich beispielsweise heißes oder kaltes Wasser verwenden. Bei heißem Wasser wird die Temperierungsmatte verwendet, um einen Raum zu beheizen. Bei kaltem Wasser kann der Raum gekühlt werden.

Vorzugsweise ist die Temperiereinrichtung durch eine Decklage abgedeckt. In diesem Fall ist die Temperier-einrichtung zwischen zwei Lagen relativ geschützt angeordnet. Man kann in der Decklage Öffnungen vorsehen, um den Klebestreifen an der Trägerbahn zu befestigen oder man kann die Decklage selbst als Klebefläche, d.h. als Klebestreifen, verwenden.

Vorzugsweise ist die Trägerbahn für Klebstoff durchlässig und das Klebeband und der Klebestreifen sind durch die Trägerbahn hindurch miteinander verklebt. Damit wird ein verbessertes Festhalten der Temperiereinrichtung an der Trägerbahn ermöglicht. Der Klebestreifen und das Klebeband haften nicht nur an der Oberseite bzw. der Unterseite der Trägerbahn. Klebestreifen und Klebeband kleben vielmehr aneinander fest, wobei die Trägerbahn dazwischen liegt, so daß sozusagen eine Art Formschluß erzeugt wird, bei dem Klebeband und Klebestreifen relativ fest miteinander verbunden sind und die Trägerbahn und die Temperiereinrichtung zwischen sich einschließen.

Bevorzugterweise weist der Klebestreifen eine Oberfläche auf, die einen wesentlich geringeren Hafteingriff mit dem Klebstoff an der Unterseite des Klebebandes bewirkt als der Hafteingriff des Klebstoffs des Klebestreifens mit der Oberseite der Trägerbahn. Beim Ausrollen der Temperierungsmatte wird sich daher das Klebeband vom Klebestreifen lösen und nicht der Klebestreifen von der Trägerbahn. Eine Beschädigung der Temperierungsmatte beim Ausrollen wird daher zuverlässig vermieden.

Auch ist von Vorteil, wenn die Oberseite des Klebestreifens eine Anti-Haft-Beschichtung aufweist. Eine Anti-Haft-Beschichtung ermöglicht es, daß das Klebeband ohne Schwierigkeiten von der Oberseite des Klebestreifens abgezogen werden kann. Rückstände des Klebstoffs des Klebebandes an der Oberseite des Klebestreifens werden daher vermieden. Auch wird die Kraft, die zum Ausrollen der Temperierungsmatte erforderlich ist, klein gehalten.

Auch ist von Vorteil, wenn der Klebstoff an der Unterseite des Klebebandes mit dem Klebstoff an der Unterseite des Klebestreifens übereinstimmt. Der Klebestreifen wird üblicherweise in einem aufgewickelten Zustand in Form einer Rolle angeliefert. Bevor er auf die Trägerbahn und die darauf befindliche Heizleitung aufgeklebt wird, muß er von der Rolle abgewickelt werden. Es ist daher erforderlich, daß sich der Klebstoff des Klebestreifens von der Oberseite der nächsten Lage des Klebestreifens gut lösen läßt. Wenn man nun den gleichen Klebstoff auf der Unterseite des Klebebandes verwendet, dann ist diese Bedingung auch beim Zusammenwirken von Klebeband und Klebestreifen automatisch gegeben, so daß man beim Ausrollen der Temperierungsmatte keine Schwierigkeiten zu erwarten hat.

Die Erfindung wird im folgenden anhand eines bevorzugten Ausführungsbeispiels in Verbindung mit der Zeichnung beschrieben. Hierin zeigen:
- Fig. 1: eine Draufsicht auf eine als Heizleitungsmatte ausgebildete Temperierungsmatte und
- Fig. 2: eine Heizleitungsmatte in aufgerolltem und teilweise abgerolltem Zustand.

Eine Heizleitungsmatte 1 weist eine Trägerbahn 2 auf, die als Gitter ausgebildet ist. Die Trägerbahn 2 weist daher Längsfäden 3 auf, die sich in Längsrichtung der Trägerbahn erstrecken, und Querfäden 4, die sich quer zur Längsrichtung erstrecken. Vielfach werden die Längsfäden 3 auch als Kettfäden und die Querfäden 4 als Schußfäden bezeichnet.

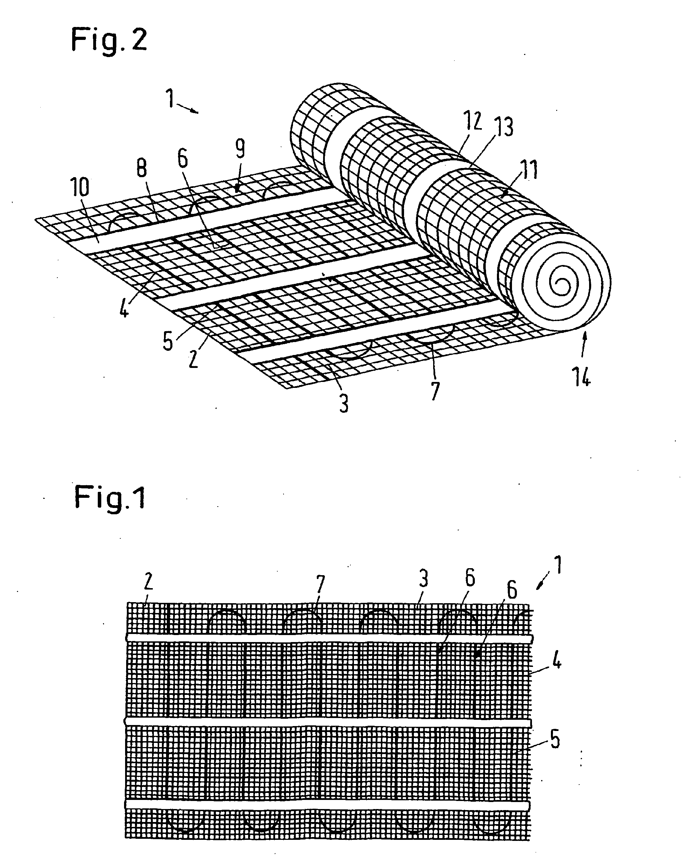

Auf der in Fig. 1 sichtbaren Oberfläche der Trägerbahn 2 ist eine Heizleitung 5 angeordnet, die eine Vielzahl von Abschnitten aufweist, die parallel zu den Querfäden 4 verlaufen. Diese Abschnitte 6 sind durch bogenförmige Abschnitte 7 miteinander verbunden. Durch die Heizleitung 5 läßt sich in nicht näher dargestellter Weise durch ebenfalls nicht näher dargestellte Anschlüsse ein elektrischer Strom leiten, der elektrische Energie in Wärmeenergie umsetzt.

Die Heizleitung 5 ist mit Hilfe von drei einseitig klebenden Klebestreifen 8 an der Oberseite 9 der Trägerbahn 2 befestigt. Dies läßt sich einfach dadurch bewerkstelligen, daß man nach Auflegen der Heizleitung 5 den Klebestreifen 8 auf die Oberseite 9 der Trägerbahn 2 aufklebt. Es können natürlich auch mehr oder weniger Klebestreifen 8 verwendet werden.

Der Klebestreifen 8 weist an seiner der Trägerbahn 2 zugewandten Unterseite eine Klebeschicht auf, die letztendlich die Verklebung mit der Trägerbahn 2 bewirkt. Der Klebestreifen 8 weist eine Oberseite 10 auf, die nicht-klebend ausgebildet ist und sogar eine Anti-Haft-Beschichtung, beispielsweise aus PTFE, aufweisen kann.

Die Trägerbahn 2 weist auch eine Unterseite 11 auf, die nur aus Fig. 2 ersichtlich ist, weil dort die Trägerbahn 2 mit der Heizleitung 5 und dem Klebestreifen 8 aufgewickelt ist. Aus Gründen der Darstellbarkeit ist die Trägerbahn 2 in Fig. 2 in teilweise abgewickeltem Zustand dargestellt.

Auf der Unterseite 11 der Trägerbahn 2 sind mehrere, im vorliegenden Fall ebenfalls drei doppelseitige Klebebänder 12 aufgeklebt. Jedes Klebeband 12 befindet sich an der Unterseite 11 genau dort, wo an der Oberseite 9 ein Klebestreifen 8 angeordnet ist. Jedes Klebeband 12 steht also in Überdeckung mit einem Klebestreifen 8. Aufgrund der Gitterstruktur ist die Trägerbahn 2 für Klebstoff von Klebestreifen 8 und/oder Klebeband 12 durchlässig, so daß der Klebestreifen 8 und das Klebeband 12 durch die Trägerbahn 2 hindurch miteinander verbunden sind. Diese Ausbildung verbessert den Zusammenhalt der Trägerbahn 2 mit der Heizleitung 5, dem Klebestreifen 8 und dem Klebeband 12.

Das Klebeband 12 ist als doppelseitiges Klebeband ausgebildet, das nicht nur an seiner der Trägerbahn 2 zugewandten Oberseite mit Klebstoff versehen ist, sondern auch an seiner Unterseite 13, die im aufgewickelten Zustand der Trägerbahn 2 jedenfalls an der äußeren Lage nach außen weist.

Innerhalb der äußeren Lage der Trägerbahn 2 wird die Unterseite 13 mit dem darauf befindlichen Klebstoff von der Oberseite 10 des Klebestreifens 8 abgedeckt, so daß zwei positive Effekte erreicht werden: Zum einen bleibt eine Rolle 14 der Heizleitungsmatte 1 im aufgewickelten Zustand stabil, weil das doppelseitige Klebeband 12 an dem Klebestreifen 8 anhaftet. Zum anderen steht beim Abwickeln der Heizleitungsmatte 1 von der Rolle 14 sofort eine Unterseite mit einer hohen Klebekraft zur Verfügung, ohne daß man eine Schutzfolie von dem doppelseitigen Klebeband 12 abziehen müßte.

Das Verlegen einer derartigen Heizleitungsmatte wird daher außerordentlich einfach. Der Monteur muß die Heizleitungsmatte 1 lediglich mit einem kleinen bereits abgewickelten Bereich auf den Untergrund auflegen. Sobald die noch aufgewickelte Heizleitungsmatte 1 ausgerichtet ist, kann der Monteur die Heizleitungsmatte durch einen Druck auf den Untergrund festkleben. Danach muß die Heizleitungsmatte 1 einfach nur ausgerollt werden. Hierzu muß der Monteur zwar eine geringe Kraft aufbringen, um die Rolle 14 abzuwickeln und dabei die Klebeverbindung zwischen dem Klebestreifen 8 und dem Klebeband 12 zu lösen. Es besteht aber keine Gefahr, daß sich die Rolle 14 versehentlich abwickelt und die Matte versehentlich an Bereichen festklebt, wo sie eigentlich nicht festkleben sollte. Man kann also mit einfachen Mitteln Sorge dafür tragen, daß die Heizleitungsmatte dort und nur dort festklebt, wo sie festkleben soll.

Der Kleber, der an der Unterseite 13 des doppelseitigen Klebebandes 12 angeordnet ist, kann dem Kleber entsprechen, mit dem der Klebestreifen 8 auf der Oberseite 9 der Trägerbahn 2 festklebt. Der Klebestreifen 8 wird üblicherweise von einer Rolle abgewickelt, so daß sich der Klebstoff des Klebestreifens 8 von der Oberseite 10 des Klebestreifens 8 lösen können muß. Wenn man an der Unterseite 13 des Klebebandes 12 den gleichen Klebstoff verwendet, dann gilt diese Bedingung auch dann, wenn die Heizleitungsmatte 1 zu der Rolle 14 aufgewickelt ist, d.h. das Klebeband 12 löst sich genauso gut vom Klebestreifen 8.

Man kann, um das Abwickeln zu erleichtern, die Oberseite 10 des Klebestreifens 8 auch mit einer Anti-Haft-Beschichtung versehen, beilspielsweise einem Film aus Polytetrafluorethylen (PTFE) oder ähnlichem.

## Patentansprüche

1. Temperierungsmatte (1) mit einer Trägerbahn (2), die eine Oberseite (9) und eine Unterseite (11) aufweist, und mindestens einer Temperiereinrichtung, die an der Trägerbahn (2) angeordnet ist, **dadurch gekennzeichnet, dass** an der Unterseite (11) der Trägerbahn (2) ein Klebstoff angeordnet ist, wobei der Klebstoff auf einem doppelseitigen Klebeband (12) angeordnet ist, das auf die Unterseite (11) der Trägerbahn (2) geklebt ist, wobei im zusammengerollten Zustand der Temperierungsmatte (1) der Klebstoff an der Unterseite des Klebebands (12) durch die Oberseite (9) der Trägerbahn (2) abgedeckt ist und das Klebeband (12) mit der Oberseite (9) der Trägerbahn (2) verklebt ist.

2. Temperierungsmatte nach Anspruch 1, **dadurch gekennzeichnet, daß** die Temperiereinrichtung mit Hilfe eines Klebestreifens (8), der auf die Oberseite der Trägerbahn (2) geklebt ist, an der Trägerbahn (2) befestigt ist, wobei im zusammengerollten Zustand der Temperierungsmatte (1) der Klebestreifen (8) und das Klebeband (12) in Überdeckung sind.

3. Temperierungsmatte nach Anspruch 1 oder 2, **dadurch gekennzeichnet, daß** die Temperiereinrichtung leitungsförmig ausgebildet ist.

4. Temperierungsmatte nach Anspruch 3, **dadurch gekennzeichnet, daß** die Temperiereinrichtung eine elektrische Leitung aufweist.

5. Temperierungsmatte nach Anspruch 3, **dadurch gekennzeichnet, daß** die Temperiereinrichtung eine Fluidleitung zum Durchleiten eines Wärmeträgerfluids aufweist.

6. Temperierungsmatte nach einem der Ansprüche 1 bis 5, **dadurch gekennzeichnet, daß** die Temperiereinrichtung durch eine Decklage abgedeckt ist.

7. Temperierungsmatte nach einem der Ansprüche 2 bis 6, **dadurch gekennzeichnet, daß** die Trägerbahn (2) für Klebstoff durchlässig ist und das Klebeband (12) und der Klebestreifen (8) durch die Trägerbahn (2) hindurch miteinander verklebt sind.

8. Temperierungsmatte nach einem der Ansprüche 2 bis 7, **dadurch gekennzeichnet, daß** der Klebestreifen (8) eine Oberfläche (10) aufweist, die einen wesentlich geringeren Hafteingriff mit dem Klebstoff an der Unterseite (13) des Klebebandes (12) bewirkt als der Hafteingriff des Klebstoffs des Klebestreifens (8) mit der Oberseite (9) der Trägerbahn (2).

9. Temperierungsmatte nach Anspruch 8, **dadurch gekennzeichnet, daß** die Oberseite (10) des Klebestreifens (8) eine Anti-Haft-Beschichtung aufweist.

10. Temperierungsmatte nach einem der Ansprüche 2 bis 9, **dadurch gekennzeichnet, daß** der Klebstoff an der Unterseite (13) des Klebebandes (12) mit dem Klebstoff an der Unterseite des Klebestreifens (8) übereinstimmt.

## Claims

1. Heating and cooling mat (1) having a support path (2) with a top side (9) and a bottom side (11), and at least one heating and cooling device that is located at the support path (2), **characterised in that** on the bottom side (11) of the support path (2) a glue is arranged on a double-sided tape (12) that is pasted on the bottom side (11) of the support path (2), so that in the rolled-up state of the heating and cooling mat (1) the glue on the bottom side of the tape (12) is covered by the top side (9) of the support path (2) and the tape (12) is bonded to the top side (9) of the support path (2).

2. Heating and cooling mat according to claim 1 or 2, **characterised in that** the heating and cooling device is fixed on the support path (2) by means of a band of glue (8) that is bonded to the top side of the support path (2), so that in the rolledup state of the heating and cooling mat (1) the band of glue (8) and the tape (12) overlap each other.

3. Heating and cooling mat according to claim 1, **characterised in that** the heating and cooling device has the shape of a tube.

4. Heating and cooling mat according to claim 3, **characterised in that** the heating and cooling device comprises an electric conductor.

5. Heating and cooling mat according to claim 3, **characterised in that** the heating and cooling device comprises a fluid tube for passing a heat carrying fluid.

6. Heating and cooling mat according to one of the claims 1 to 5, **characterised in that** the heating and cooling device is covered by a top layer.

7. 7 Heating and cooling mat according to one of the claims 2 to 6, **characterised in that** the support path (2) is permeable to glue and the tape (12) and the band of glue (8) are bonded to each other through the support path (2).

8. Heating and cooling mat according to one of the claims 2 to 7, **characterised in that** band of glue (8) has a surface (10) that causes a substantially smaller bonding engagement with the glue on the bottom side (13) of the tape (12) than the bonding engagement of the glue of the band of glue (8) with the top side (9) of the support path (2).

9. Heating and cooling mat according to claim 8, **characterised in that** the top side (10) of the band of glue (8) comprises a non-stick coating.

10. Heating and cooling mat according to one of the claims 2 to 9, **characterised in that** the glue on the bottom side (13) of the tape (12) corresponds to the glue on the bottom side of the band of glue (8).

## Revendications

1. Tapis de climatisation (1) avec une bande de support (2), qui comprend un côté supérieur (9) et un côté inférieur (11), et au moins un dispositif de climatisation disposé sur la bande de support (2), **caractérisé en ce que**, sur le côté inférieur (11) de la bande de support (2) se trouve une colle, cette colle se trouvant sur un ruban adhésif double face (12), qui est collé sur le côté inférieur (11) de la bande de support (2), et **en ce que**, lorsque le tapis de climatisation (1) est enroulé, la colle du côté inférieur du ruban adhésif (12) est recouverte par le côté supérieur (9) de la bande de support (2) et le ruban adhésif (12) est collé au côté supérieur (9) de la bande de support (2).

2. Tapis de climatisation selon la revendication 1, **caractérisé en ce que** le dispositif de climatisation est fixé à la bande de support (2) à l'aide d'une bande adhésive (8) qui est collée sur le côté supérieur de la bande de support (2), la bande adhésive (8) et le ruban adhésif (12) se superposant lorsque le tapis de climatisation (1) est enroulé.

3. Tapis de climatisation selon la revendication 1 ou 2, **caractérisé en ce que** le dispositif de climatisation présente la forme d'une conduite.

4. Tapis de climatisation selon la revendication 3, **caractérisé en ce que** le dispositif de climatisation comprend une conduite électrique.

5. Tapis de climatisation selon la revendication 3, **caractérisé en ce que** le dispositif de climatisation comprend une conduite de fluide pour le transport d'un fluide caloporteur.

6. Tapis de climatisation selon l'une des revendications 1 à 5, **caractérisé en ce que** le dispositif de climatisation est recouvert d'une couche superficielle.

7. Tapis de climatisation selon l'une des revendications 2 à 6, **caractérisé en ce que** la bande de support (2) pour l'adhésif est perméable et **en ce que** le ruban adhésif (12) et la bande adhésive (8) sont collés ensemble à travers la bande de support (2).

8. Tapis de climatisation selon l'une des revendications 2 à 7, **caractérisé en ce que** la bande adhésive (8) comprend une surface (10) qui produit un effet d'adhérence avec la colle sur le côté inférieur (13) du ruban adhésif (12) nettement plus faible que l'effet d'adhérence de la bande adhésive (8) avec le côté supérieur (9) de la bande de support (2).

9. Tapis de climatisation selon la revendication 8, **caractérisé en ce que** le côté supérieur (10) de la bande adhésive (8) comprend une couche antiadhésive.

10. Tapis de climatisation selon l'une des revendications 2 à 9, **caractérisé en ce que** la colle sur le côté inférieur (13) du ruban adhésif (12) correspond à la colle sur le côté inférieur de la bande adhésive (8).
